(19) Europäisches Patentamt
European Patent Office
Office européen des brevets

(11) Veröffentlichungsnummer: **0 304 475 B1**

(12) **EUROPÄISCHE PATENTSCHRIFT**

(45) Veröffentlichungstag der Patentschrift: **16.12.92**

(51) Int. Cl.⁵: **A22C 25/16**

(21) Anmeldenummer: **88902829.6**

(22) Anmeldetag: **12.03.88**

(86) Internationale Anmeldenummer:
**PCT/EP88/00198**

(87) Internationale Veröffentlichungsnummer:
**WO 88/06844 (22.09.88 88/21)**

(54) **VORRICHTUNG ZUM FILETIEREN VON FISCHEN.**

(30) Priorität: **14.03.87 DE 3708365**

(43) Veröffentlichungstag der Anmeldung:
**01.03.89 Patentblatt 89/09**

(45) Bekanntmachung des Hinweises auf die
Patenterteilung:
**16.12.92 Patentblatt 92/51**

(84) Benannte Vertragsstaaten:
**CH DE FR GB IT LI SE**

(73) Patentinhaber: **APPARATEBAU GUNTHER KRONAWITTER**
**Industriegebiet**
**W-8357 Wallersdorf(DE)**

(72) Erfinder: **KRONAWITTER, Günther**
**Industriegebiet**
**W-8357 Wallersdorf(DE)**

(74) Vertreter: **Gustorf, Gerhard, Dipl.-Ing.**
**Patentanwalt Dipl.-Ing. Gerhard Gustorf**
**Bachstrasse 6 A**
**W-8300 Landshut(DE)**

EP 0 304 475 B1

**Beschreibung**

Die Erfindung betrifft eine Vorrichtung zum Filetieren von Fischen mit einem Sattel zur Aufnahme des rittlings aufgesetzten, ausgenommenen Fisches und mit einem rotierenden Kreismesserpaar, zwischen dessen Messern hindurch der Sattel zum Filetieren des Fisches verschiebbar ist, wobei der Abstand der beiden Kreismesser entsprechend der Dicke des Sattels veränderbar ist.

Eine Vorrichtung ähnlicher Bauart ist in der FR-A 1 094 257 beschrieben und dargestellt, wobei ein elastisch gelagertes Kreismesserpaar unterhalb zweier Auflageflächen liegt, die von dem Sattel schräg nach unten abstehen. Ein oberes Kreismesserpaar ist so gelagert, daß der gegenseitige Abstand der Messer konstant ist.

Aus der DE-A 15 79 569 ist eine Vorrichtung zum Filetieren von Fischen bekannt, bei der in Vorschubrichtung des zu filetierenden Fisches zwei Kreismesserpaare hintereinander angeordnet und auf Maschinenteilen befestigt sind, die um vertikale Achsen schwenkbar sind. Die Schwenkbewegung erfolgt über zwei den Fisch seitlich abfühlende Rollen, so daß die Messerabstände nicht in Abhängigkeit von der Stegdicke, sondern von der Dicke des zwischen den beiden Rollen durchlaufenden Fisches variiert. Bevor dieser die Rollen erreicht, hat er jedoch bereits ein Kreismesserpaar passiert, ohne daß dessen Abstand verändert worden wäre.

Der Erfindung liegt die Aufgabe zugrunde, eine Vorrichtung der eingangs angegebenen Bauart so auszubilden, daß der Abstand der Kreismesser der Dicke des Fisches entspricht, der auf den Sattel aufgesetzt ist, welcher seinerseits an die Dicke des Fisches angepaßt sein soll.

Bei einer Vorrichtung der angegebenen Gattung wird diese Aufgabe durch das Kennzeichen des Patentanspruchs 1 gelöst.

Damit wird die Möglichkeit eröffnet, in Abhängigkeit von unterschiedlichen Fischgrößen verschieden starke Sattel einzusetzen, an deren Dicke der Abstand der Kreismesser angepaßt wird. Der Abstand der Kreismesser paßt sich jeweils automatisch an die Dicke des Sattels an.

Um während des Filetiervorganges sicherzustellen, daß der Fisch fest auf dem Sattel ruht, sind über dem Sattel und zu dessen beiden Seiten Andruckorgane für den Fisch vorgesehen, die als federnd am Fisch anliegende Rollen ausgebildet sein können.

Es ist aber auch möglich, daß der Sattel Saugelemente zum Ansaugen des Fisches an seine Seitenflächen aufweist.

Es ist vorteilhaft, wenn in Arbeitsrichtung vor den Kreismessern und über dem Sattel ein in dessen Längsmittelebene liegendes Messer vorgesehen ist. Dieses Messer schneidet den Fisch in der Mitte vom Rücken her bis zum Rückgrat hinunter auf. Zwei folgende Abweisorgane lenken dann die eingeschnittenen Fleischteile zur Seite hin ab, bevor anschließend die beiden Kreismesser die Filetierung durchführen. Auf diese Weise geht der über dem Rückgrat vorhandene Fleischanteil nicht verloren, der bei einem breiten Rückgrat besonders groß ist.

Weitere Merkmale und Vorteile der Erfindung ergeben sich aus den Unteransprüchen und aus der folgenden Beschreibung eines Ausführungsbeispiels, das in der Zeichnung dargestellt ist.

Es zeigen:

Figur 1    eine schematische Seitenansicht einer Vorrichtung gemäß der Erfindung und

Figur 2    eine schematische Draufsicht der Vorrichtung gemäß Figur 1.

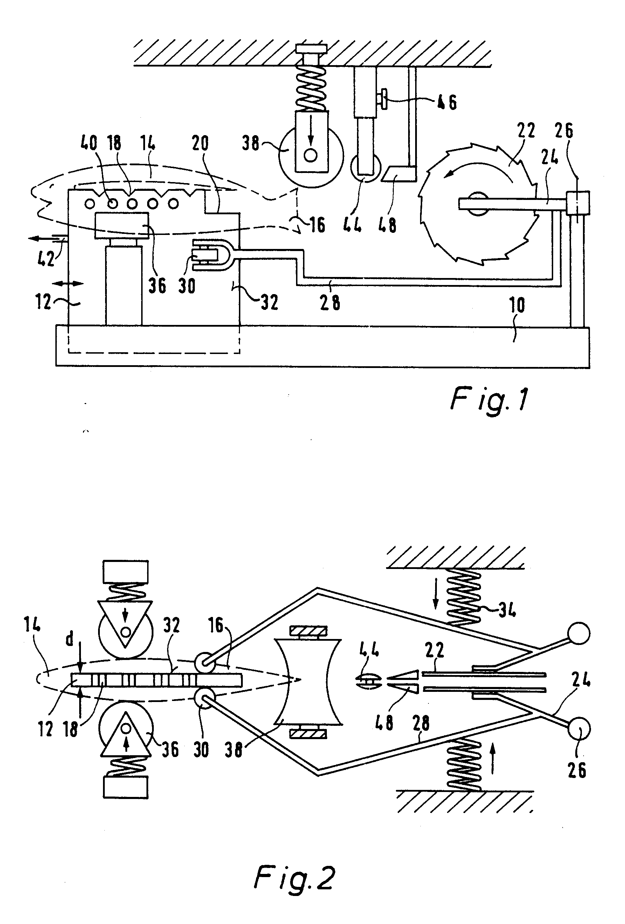

Figur 1 zeigt schematisch eine Grundplatte 10 mit einer Langsführung für einen als Platte ausgebildeten Sattel 12, der in Richtung des eingezeichneten Doppelpfeiles in Längsrichtung verschiebbar ist. Der Antrieb für die Verschiebebewegung ist nicht weiter dargestellt. Die Dicke d des Sattels 12 kann durch Austausch des Sattels an die Größe des zu filetierenden Fisches 14 angepaßt werden. Der ausgenommene Fisch 14 ist rittlings auf den Sattel 12 aufgesetzt, wobei das Schwanzende 16 in Vorschubrichtung des Sattels 12 nach vorn weist. Um eine gute Auflage des Fisches 14 auf dem Sattel 12 zu gewährleisten, hat dessen Oberkante quer verlaufende Einschnitte 18 und ist im Bereich des Schwanzende 16 mit einem stufenförmigen Absatz 20 versehen.

In Vorschubrichtung vor dem Sattel 12 sind zwei i.w. parallel nebeneinander angeordnete Kreismesser 22 vorgesehen, die um eine horizontale Achse drehbar an je einem Schwenkhebel 24 gelagert sind. Der Drehantrieb für die Kreismesser 22 ist ebenfalls nicht dargestellt. Die beiden Schwenkhebel 24 sind um eine vertikale Achse 26 schwenkbar an der Grundplatte 10 gelagert.

An jedem Schwenkhebel 24 ist ein Tastarm 28 befestigt, dessen freies Ende sich bis zu dem Sattel 12 hin erstreckt und eine Tastrolle 30 trägt, die an einer Seitenfläche 32 des Sattels 12 anliegt. Dabei sind Andruckorgane 34 vorgesehen, die als Druckfedern ausgebildet sind und am Tastarm 28 angreifen, um die Tastrolle 30 federnd gegen die Seitenfläche 32 des Sattels 12 zu drücken.

Aufgrund dieser Ausbildung paßt sich der Abstand der beiden Kreismesser 22 an die Dicke d des Sattels 12 so an, daß der genannte Abstand nur wenig größer als die Dicke d ist, wodurch der beim Filetieren aus dem Fisch 14 herausgeschnittene und die Gräten enthaltende Fleischteil so dünn wie möglich ist.

Während der Vorschubbewegung des Sattels 12 mit dem darauf aufgesetzten Fisch 14 zwischen den beiden Kreismessern 22 hindurch sorgen seitlich am Fisch 14 federnd anliegende Rollen 36 dafür, daß der Fisch 14 eng am Sattel 12 anliegt. Denselben Zwecke hat eine federnd von oben gegen den Fisch 14 anliegende Andruckrolle 38.

In Figur 1 ist darüber hinaus angedeutet, daß im Bereich der Oberkante des Sattels 12 Saugbohrungen 40 vorgesehen sein können, die über eine Saugleitung 42 mit einer nicht gezeigten Ansaugquelle verbunden sind. Die Saugbohrungen 40 sorgen bei dieser Ausführung ebenfalls dafür, daß der Fisch 14 eng an den Seitenflächen 32 des Sattels 12 anliegt.

Die Dicke d des eingesetzten Sattels 12 wird durch die Rückgratbreite der zu filetierenden Fische bestimmt. Besonders bei größeren Fischen befindet sich über dem Rückgrat ein großer Fleischanteil. Um diesen durch das Filetieren mittels der beiden Kreismesser 22 nicht zu verlieren, ist vor diesen und über dem Sattel 12 ein in dessen Längsmittelebene angeordnetes Messer 44 vorgesehen, das als Kreismesser oder auch als feststehende Messerklinge ausgebildet sein kann. Vorzugsweise ist das Messer 44 vertikal einstellbar, wie dies in Figur 1 durch eine Stellschraube 46 angedeutet ist, so daß der Rücken des Fisches in Längsrichtung bis zum Rückgrat eingeschnitten wird. Beim weiteren Vorschub durch den Sattel 12 erfassen unmittelbar anschließend zwei seitliche, keilförmige Abweisorgane 48 die eingeschnittenen Fleischteile und lenken sie zur Seite hin ab, bevor sie von den beiden Kreismessern 22 erfaßt werden können. Mit dieser Maßnahme wird die Ausbeute beim Filetieren weiter erhöht.

## Patentansprüche

1. Vorrichtung zum Filetieren von Fischen mit einem Sattel (12) zur Aufnahme des rittlings aufgesetzten, ausgenommenen Fisches (14) und mit einem rotierenden Kreismesserpaar (22), zwischen dessen Messern (22) hindurch der Sattel (12) zum Filetieren des Fisches (14) verschiebbar ist, wobei der Abstand der beiden Kreismesser (22) entsprechend der Dicke (d) des Sattels (12) veränderbar ist, dadurch **gekennzeichnet,** daß jedes Kreismesser (22) an einem um eine vertikale Achse (26) schwenkbaren Schwenkhebel (24) gelagert ist, und daß mit jedem Schwenkhebel (24) ein Tastarm (28) verbunden ist, dessen freies Ende eine Tastrolle (30) trägt, die an einer Seitenfläche (32) des Sattels (12) anliegt.

2. Vorrichtung nach Anspruch 1, dadurch gekennzeichnet, daß die Tastrolle (30) durch Federdruck an der Seitenfläche (32) des Sattels (12) anliegt.

3. Vorrichtung nach Anspruch 1 oder 2, dadurch gekennzeichnet, daß über dem Sattel (12) und zu dessen beiden Seiten Andruckorgane (36, 38) für den Fisch (14) vorgesehen sind.

4. Vorrichtung nach Anspruch 3, dadurch gekennzeichnet, daß die Andruckorgane (36, 38) federnd am Fisch (14) anliegende Rollen sind.

5. Vorrichtung nach einem der vorhergehenden Ansprüche, dadurch gekennzeichnet, daß der Sattel (12) Saugelemente (40) zum Ansaugen des Fisches (14) an seine Seitenflächen (32) aufweist.

6. Vorrichtung nach einem der vorhergehenden Ansprüche, dadurch gekennzeichnet, daß der Sattel (12) als Platte mit ebenen Seitenflächen (32) ausgebildet ist.

7. Vorrichtung nach einem der vorhergehenden Ansprüche, dadurch gekennzeichnet, daß in Arbeitsrichtung vor den Kreismessern (22) und über dem Sattel (12) ein in dessen Längsmittelebene liegendes Messer (44) vorgesehen ist.

8. Vorrichtung nach Anspruch 7, dadurch gekennzeichnet, daß das Messer (44) vertikal verstellbar ist.

9. Vorrichtung nach Anspruch 7 oder 8, dadurch gekennzeichnet, daß das Messer (44) als Kreismesser ausgebildet ist.

10. Vorrichtung nach einem der Ansprüche 7 bis 9, dadurch gekennzeichnet, daß zwischen dem Messer (44) und den beiden Kreismessern (22) zwei die vom Messer (44) über dem Rückgrat des Fisches eingeschnittenen Fleischteile seitlich ablenkende Abweisorgane (48) angebracht sind.

## Claims

1. An apparatus for filleting fish, comprising a saddle (12) upon which the eviscerated fish (14) are placed astride and a pair of rotating circular knives (22), between the blades of which said saddle (12) is displaceable longitudinally for the purpose of filleting the fish (14), the distance between the circular knives (22) being variable according to the thickness (d) of the saddle (12), characterised in that each circular knife (22) is mounted upon a lever (24) adapted to pivot about a vertical axis (26), and that a sensing arm (28) is connected to each lever (24) and the free end of the sensing arm (28) carries a sensing roller (30) bearing against a lateral surface (32) of the saddle (12).

2. An apparatus according to claim 1, in which the sensing roller (30) is held by spring-pressure to the lateral surface (32) of the saddle (12).

3. An apparatus according to claim 1 or 2, in which pressure-elements (36, 38) for the fish (14) are provided above the saddle (12) and on both sides thereof.

4. An apparatus according to claim 3, in which the pressure-elements (36,38) are rollers bearing resiliently against the fish (14).

5. An apparatus according to anyone of the preceding claims, in which the saddle comprises (12) suction-elements (40) for applying suction to the fish (14) against the lateral surfaces (32) of the saddle (32).

6. An apparatus according to anyone of the preceding claims, in which the saddle (12) is in the form of a plate with flat lateral surfaces (32).

7. An apparatus according to anyone of the preceding claims, in which a blade (44) lying in the longitudinal central plane of the saddle (12) is arranged in front of the circular knives (22), as seen in the operating direction, and above the saddle (12).

8. An apparatus according to claim 7, in which the blade (44) is vertically adjustable.

9. An apparatus according to claim 7 or 8, in which the blade (44) is a circular blade.

10. An apparatus according to anyone of claims 7, 8 or 9, in which two elements (48) which deflect laterally the pieces of fish cut from the backbone thereof by the blade (44) are fitted between the blade (44) and the two circular knives (22).

**Revendications**

1. Dispositif pour lever des filets de poissons, comprenant une selle (12) pour le support à cheval du poisson vidé (14) et une paire de couteaux rotatifs (22) à travers lesquels la selle (12) peut être poussée pour tirer les filets du poisson, la distance des deux couteaux pouvant être variée selon l'épaisseur de la selle (12), caractérisé par le fait que chaque couteau rotatif (22) est logé à un levier pivotant (24) autour d'un axe vertical (26), et que avec chaque levier pivotant (24) est relié un bras palpeur (28) dont l'extrémité libre porte un galet palpeur (30) qui s'appuie contre la surface latérale (32) de la selle (12).

2. Dispositif selon la revendication 1, caractérisé par le fait que le galet palpeur (30) est serré contre la surface latérale (32) de la selle (12) par une pression élastique.

3. Dispositif selon la revendication 1 ou 2, caractérisé par le fait que au-dessus de la selle (12) et à ses deux côtés sont disposés des organes de pression (36, 38) agissant sur le poisson.

4. Dispositif selon la revendication 3, caractérisé par le fait que les organes de pression (36, 38) sont des rouleaux qui s'appuyent élastiquement contre le poisson.

5. Dispositif selon une des revendications précédentes, caractérisé par le fait que la selle (12) est munie des éléments d'aspiration (40) pour attirer par succion le poisson contre les surfaces latérales (32).

6. Dispositif selon une des revendications précédentes, caractérisé par le fait que la selle (12) est une plaque qui présente les surfaces latérales planes (32).

7. Dispositif selon une des revendications précédentes, caractérisé par le fait que en amont des couteaux rotatifs (22) et au-dessus de la selle (12) est placé un couteau (44) disposé dans le plan longitudinal médian de la selle (12).

8. Dispositif selon la revendication 7, caractérisé par le fait que le couteau (44) peut être déplacé verticalement.

9. Dispositif selon la revendication 7 ou 8, caractérisé par le fait que le couteau (44) est un couteau circulaire.

10. Dispositif selon une des revendication 7 à 9, caractérisé par le fait que entre les couteau (44) et les deux couteaux rotatifs (22) sont placés des organes déflecteurs (48) pour dévier latéralement les deux filets entaillés par le couteau (44) au-dessus de la colonne vertébra-

le du poisson.

Fig.1

Fig.2